# FASCICULE DE BREVET EUROPEEN

(11) **EP 1 718 884 B1**
(45) Date de publication et mention de la délivrance du brevet: **14.11.2012**
(21) Numéro de dépôt: 05717539.0
(22) Date de dépôt: 03.02.2005
(51) Int. Cl.: F16D 55/32, F16D 55/224, F16D 65/095, F16D 55/228

(54) **FREIN A DISQUE A PLAQUETTES AJUSTABLES**
MIT VERSTELLBAREN BELÄGEN VERSEHENE SCHEIBENBREMSE
DISC BRAKE PROVIDED WITH ADJUSTABLE LININGS

(30) Priorité: 03.02.2004 FR 0400994
(43) Date de publication de la demande: 08.11.2006
(73) Titulaire: Sime-Stromag, 18150 La Guerche-sur-l'Aubois (FR)
(72) Inventeur: CHAMIGNON, Mathieu, F-18000 Bourges (FR); EON, Christian, F-58660 Coulanges les Nevers (FR); LOREAU, François, F-58600 Garchizy (FR)
(74) Mandataire: Santarelli
(86) Numéro de dépôt international: PCT/FR2005/000227
(87) Numéro de publication internationale: WO 2005/083290

(56) Documents cités:
- EP-A- 0 352 559
- EP-A- 1 367 285
- DE-U- 1 887 149
- GB-A- 2 054 074
- US-A- 3 768 605
- US-A- 3 999 635

## Description

La présente invention concerne un frein à disque à plaquettes ajustables destiné notamment à un usage industriel.

La présente invention s'applique à tous types de freins à disque. Un tel frein comporte généralement au moins deux plaquettes de freinage portées par un étrier adapté à chevaucher un disque et destinées à coopérer chacune avec une face latérale du disque sous l'action de moyens de manoeuvre. Lors d'un freinage, les moyens de manoeuvre entraînent les plaquettes de freinage l'une vers l'autre venant ainsi pincer le disque de manière à l'immobiliser ou à le maintenir immobile. Lors d'une immobilisation, les plaquettes de freinage ont tendance à être entraînées circonférentiellement par le disque. Pour les retenir, on prévoit alors de part et d'autre de chaque plaquette de freinage une butée, dite butée transversale. Ces butées reçoivent le couple de freinage qui est retransmis à un support fixe portant l'étrier.

Dans le domaine industriel, les applications de tels freins sont multiples : presque toute machine en mouvement peut être équipée d'un tel frein. A titre d'exemple, on cite les engins de manutention et/ou de levage (pont roulant, etc...).

Le document DE-18 87 149 U décrit un frein à disque dans lequel le changement d'un patin est facilité. Dans chaque branche de l'étrier fixe de ce frein se trouvent un cylindre de manoeuvre ainsi que des butées non réglables pour le patin correspondant. Les butées sont chacune fixée par deux vis sur une branche de l'étrier, les vis traversant la branche correspondante. Ces vis peuvent être desserrées de l'extérieur.

Un frein à disque selon l'invention est plus particulièrement destiné au contrôle du mouvement de giration d'une nacelle d'éolienne. Des problèmes spécifiques à une telle application existent et la présente invention vise à y remédier.

Dans une telle application, les vitesses de rotation sont peu élevées. Par contre les forces (et couples) mises en oeuvre sont très importantes. En outre, le plus souvent, le frein est serré pour maintenir la nacelle de l'éolienne immobile. Il faut alors maintenir du mieux possible le disque et éviter tout mouvement des plaquettes de freinage dans leur logement. De tels mouvements génèrent tout d'abord des bruits de claquement à éviter. Compte tenu des forces importantes mises en oeuvre, ces mouvements, même lorsqu'ils sont minimes, provoquent une usure prématurée au niveau des dentures mises en oeuvre pour commander la giration de la nacelle (roue d'entraînement associée à un moteur et couronne dentée associée à la nacelle). Au niveau du frein, les plaquettes de freinage sont généralement poussées par des pistons mus hydrauliquement. En cours de freinage, un mouvement de la plaquette de freinage entraîne les pistons agissant sur cette plaquette de freinage exerçant alors une contrainte sur les joints de ces pistons. Lorsque le déplacement de la plaquette de freinage est supérieur au jeu entre les pistons et les cylindres correspondants, des fuites hydrauliques peuvent survenir.

Dans cette application, une autre particularité est que le frein à disque est le plus souvent très difficile d'accès. Il se trouve à plusieurs (dizaines de) mètres au-dessus du sol et est disposé au milieu d'éléments qui rendent difficile l'accès à ce frein.

La présente invention a alors pour but de fournir un frein à disque permettant un ajustement des plaquettes de freinage dans leur logement. De préférence, le changement d'une plaquette de frein ainsi que son calage pourront s'effectuer facilement, sans nécessiter notamment la dépose complète de l'étrier portant ladite plaquette. A cet effet, elle propose un frein à disque pour usage industriel

d'après la revendication 1.

De cette manière la plaquette de freinage peut être ajustée parfaitement par effet de coin. Un tel ajustement se réalise facilement et permet d'éviter tout problème de déplacement longitudinal, tangentiel ou radial de la plaquette de freinage dans son logement ou de régler un jeu fonctionnel constant. Sur un tel frein, le calage des plaquettes de freinage est réalisé par ajustement mécanique lors de leur montage. Ce calage peut être qualifié de statique par opposition aux calages connus de l'art antérieur (cf. par exemple US-3,768,605 ou EP-0 352 559) pour lesquels le calage s'effectue grâce à des moyens élastiques lorsque les pièces sont en mouvement (calage dynamique).

On remarque que l'invention peut s'appliquer aussi bien à un frein à étrier coulissant qu'à un frein à étrier fixe. Les documents précités concernent uniquement des freins à étrier flottant.

Les faces d'appui de la plaquette de freinage peuvent être sensiblement planes (rectilignes) ou courbes. Il en va de même pour les surfaces d'appui des butées correspondantes. Dans le cas de surfaces planes au niveau de la plaquette de freinage et des butées, les deux faces d'appui transversales opposées de la plaquette de freinage forment alors des surfaces convergentes et les butées transversales correspondantes comportent des surfaces de forme complémentaire.

Dans un frein à disque selon l'invention, on peut prévoir pour chaque plaquette de freinage une butée transversale fixe et une butée transversale réglable (et donc mobile) ou bien deux butées transversales réglables (un plus grand nombre de butées transversales peut bien entendu être envisagé comme décrit plus loin). Pour faciliter le montage/démontage d'une plaquette de freinage, au moins une butée mobile coopérant avec une face d'appui d'une plaquette de freinage est avantageusement amovible.

Une forme de réalisation avantageuse, permettant de faciliter encore le montage/démontage d'une plaquette de freinage, prévoit qu'une branche de l'étrier portant une plaquette de freinage comporte une face latérale parallèle au disque et destinée à recevoir la plaquette de freinage ainsi que deux faces transversales sensiblement radiales, et qu'au moins une butée coopérant avec une face d'appui de la plaquette de freinage est fixée sur une face transversale sensiblement radiale et fait saillie de la face latérale de l'étrier pour maintenir ladite plaquette de freinage.

Dans cette forme de réalisation, ladite butée est par exemple fixée par vissage sur la face transversale de la branche d'étrier et un trou oblong est prévu dans ladite butée pour le passage de chaque vis. La coopération des trous oblongs et des vis permet de réaliser le réglage de la butée correspondante.

Pour réaliser des surfaces convergentes, l'invention propose que chaque plaquette de freinage présente une forme trapézoïdale, les côtés inclinés du trapèze formant les surfaces d'appui transversales opposées de la plaquette de freinage. Dans cette variante de réalisation, la grande base de la plaquette de freinage vient par exemple en appui contre la base de l'étrier. On réalise ainsi un calage de la plaquette de freinage contre les butées et contre la base de l'étrier.

La présente invention propose également une variante de réalisation dans laquelle deux bords opposés d'une plaquette de freinage présentent chacun deux surfaces d'appui convergentes formant un dièdre. Pour faciliter l'ajustement de la plaquette, les bords comportant les surfaces d'appui de la plaquette de freinage présentent avantageusement une convexité orientée vers l'extérieur de la plaquette de freinage (une convexité orientée vers l'intérieur de la plaquette de freinage convient également mais le calage est alors peut-être moins aisé à réaliser). Pour permettre un meilleur ajustement de la plaquette, à chaque surface d'appui correspond de préférence une butée transversale. Les deux butées transversales se trouvant d'un même côté d'une plaquette de freinage peuvent être indépendantes l'une de l'autre mais on peut aussi prévoir qu'elles soient reliées entre elles par un dispositif permettant de régler l'écartement entre lesdites butées transversales. Dans cette dernière variante, il reste un degré de liberté entre les deux butées, ce qui est suffisant pour assurer un bon ajustement.

Des détails et avantages de la présente invention ressortiront mieux de la description qui suit, faite en référence au dessin schématique annexé sur lequel :
La figure 1 est une vue en perspective d'un demi-étrier d'un frein à disque selon l'invention,
La figure 2 est une vue similaire à celle de la figure 1 pour une variante de réalisation,
La figure 3 correspond à échelle réduite à une vue de face de l'ensemble montré sur la figure 1,
La figure 4 est une vue de face, à échelle réduite, de l'ensemble montré sur la figure 2,
La figure 5 représente partiellement une variante de réalisation par rapport aux figures 2 et 4, et
La figure 6 représente une vue similaire aux vues des figures 1 et 2 pour une autre variante de réalisation d'un demi-étrier de frein selon l'invention.

Chacune des figures représente la moitié d'un étrier d'un frein à disque. Le plan de coupe de l'étrier correspond sensiblement au plan de symétrie principal du disque (non représenté).

De manière classique, l'étrier dont il est question ici comporte une base 2 et deux branches 4. La base 2 est destinée à se trouver à la périphérie du disque tandis que les branches 4 se trouvent de part et d'autre de ce disque. Chacune des branches 4 porte dans la forme de réalisation représentée, sur sa face orientée vers le disque, une plaquette de freinage 6.

La base 2 de l'étrier est destinée notamment à la fixation du frein à disque sur un support fixe (non représenté). A cet effet, des alésages sont réalisés dans la base 2. On remarque deux types d'alésage : des premiers alésages 8 (ici au nombre de deux) sont prévus pour des vis de pré-assemblage et des alésages 10 (ici au nombre de huit) sont prévus pour les vis de fixation de l'étrier sur son support.

La branche 4 représentée est de forme sensiblement parallélépipédique. Elle comporte une face latérale avant 12 qui reçoit la plaquette de freinage 6 correspondante. Elle comporte également, de part et d'autre de cette face latérale avant, deux faces transversales 14 qui s'étendent perpendiculairement à la face latérale avant 12 et sont sensiblement radiales par rapport au disque (non représenté). La branche 4 comporte ici également une face inférieure 16 qui est sensiblement perpendiculaire à la face latérale avant 12 et aux faces transversales 14.

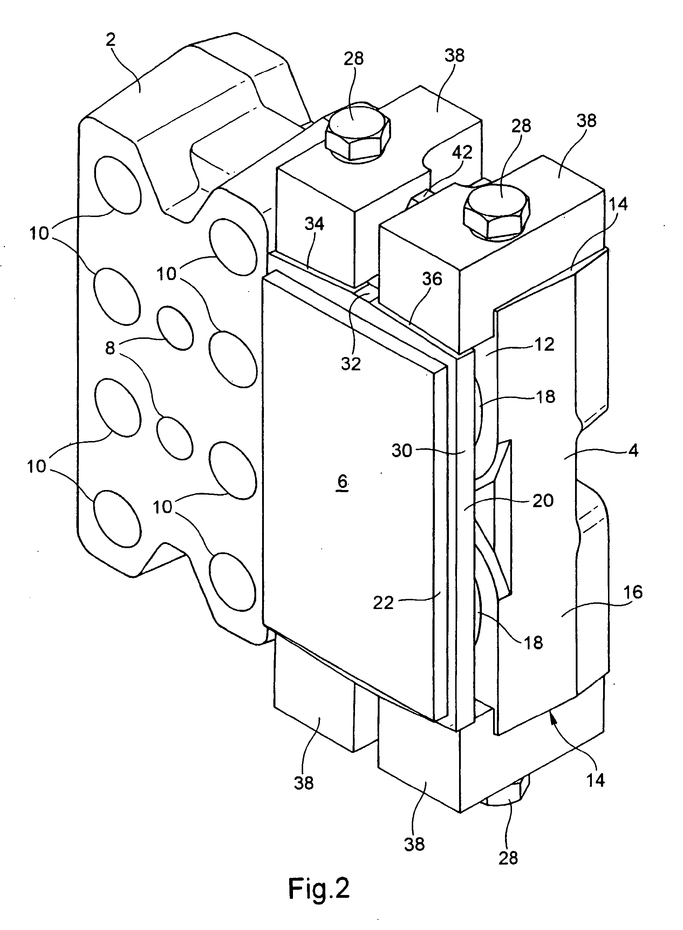

Dans la face latérale avant 12 débouchent des cylindres 18 (figure 2) dans lesquels coulissent des pistons (non représentés) mus hydrauliquement. Ces derniers sont destinés à agir sur la plaquette de freinage 6 correspondante afin de déplacer celle-ci en direction du disque à freiner.

En ce qui concerne la structure générale de ce disque de frein et de l'actionnement des pistons pour réaliser un freinage, il est fait référence par exemple au document FR -2 840 379 au nom de la Demanderesse.

Dans les diverses formes de réalisation représentées aux dessins, la plaquette de freinage 6 comporte d'une part une plaque métallique 20 et d'autre part une garniture 22.

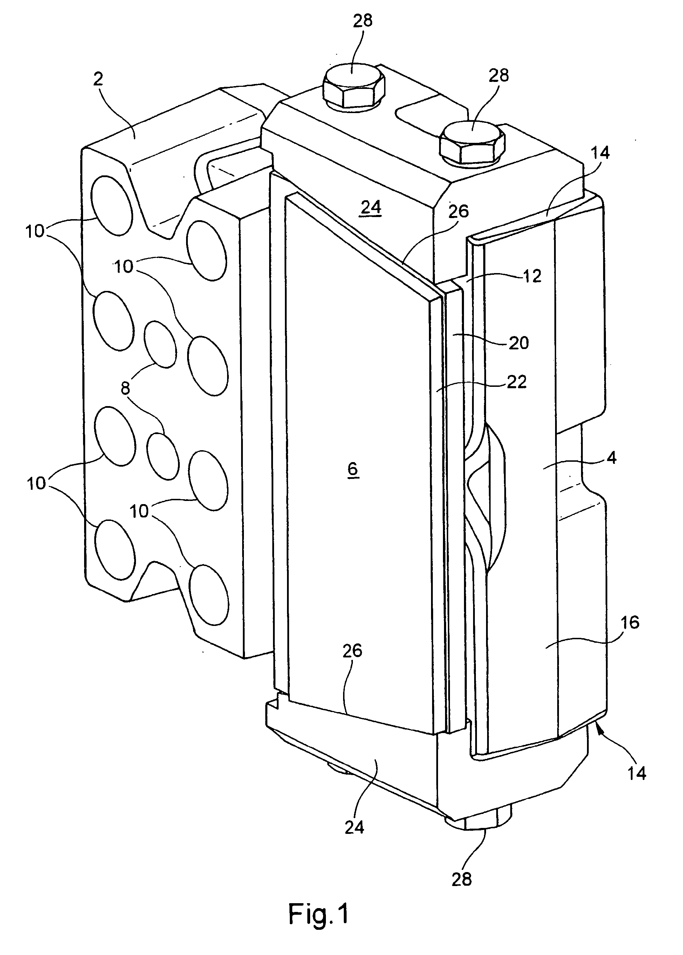

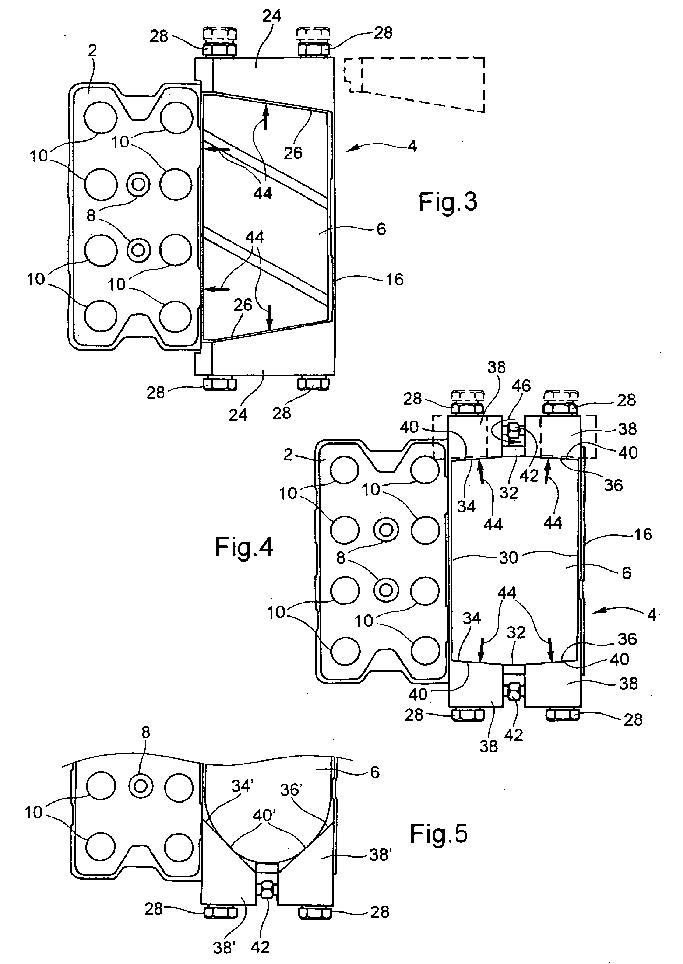

Dans la première forme de réalisation (figures 1 et 3), la plaque métallique 20 présente une forme trapézoïdale. La garniture 22 correspondante reprend sensiblement la forme de la plaque métallique 20. Le trapèze est orienté de telle sorte que sa grande base se trouve du côté de la base 2 de l'étrier tandis que sa petite base se trouve orientée vers l'intérieur du disque. Le trapèze est un trapèze symétrique. Ainsi, l'angle formé par la grande base et chacun des côtés inclinés est égal. Bien entendu, une autre forme trapézoïdale peut être envisagée ici.

Face aux bords inclinés du trapèze, se trouve à chaque fois une butée 24 dite butée transversale. Chaque butée 24 présente une surface d'appui 26 de forme complémentaire à celle des bords inclinés de la plaque métallique 20. Chaque butée 24 est fixée à l'aide de vis 28 sur la face transversale 14 correspondante de la branche 4. Ainsi une butée 24 vient recouvrir ladite face transversale 14 et fait saillie au-dessus de la face latérale avant 12 correspondante. La partie en saillie porte la surface d'appui 26. Vue en coupe, selon un plan de coupe parallèle à la face inférieure 16 de la branche 4, les butées 24 présentent dans cette forme de réalisation sensiblement une section en forme de L, la petite barre horizontale du L étant de longueur variable selon le plan de coupe choisi. Les deux butées 24 sont symétriques l'une par rapport à l'autre. Des trous oblongs (non représentés) réalisés dans les butées 24 sont traversés par les vis 28 et permettent le réglage des butées 24 en permettant leur déplacement le long du bord incliné correspondant de la plaque métallique. Dans cette forme de réalisation, les deux butées 24 transversales représentées sur les figures 1 et 3 sont des butées réglables. On pourrait toutefois avoir une butée 24 transversale fixe et l'autre réglable. La butée fixe pourrait être par exemple vissée, sur la branche 4 sans comporter de trous oblongs ou par exemple ne former qu'une seule pièce avec cette branche.

Dans la seconde forme de réalisation (figures 2 et 4) la plaque métallique 20 présente une forme sensiblement octogonale. Dans la forme de réalisation représentée, la garniture 22 correspondante est quant à elle de forme rectangulaire et occupe quasiment toute la surface de la plaque métallique 20.

La plaque octogonale présente deux bords tangentiels similaires. Un premier bord tangentiel s'étend du côté de la base 2 de l'étrier tandis que l'autre bord lui est opposé.

Les bords transversaux de la plaque métallique 20 présentent chacun trois côtés de l'octogone. Le côté central est un méplat 32 de faible longueur qui relie deux surfaces d'appui 34 et 36. Chacune de ces surfaces d'appui fait avec le bord tangentiel 30 correspondant un angle supérieur à 90°. Ainsi, pour un bord transversal, les surfaces d'appui 34 et 36 avec le méplat 32 forment un bord convexe (la convexité est tournée vers l'extérieur de la plaque métallique 20). Les surfaces d'appui 34 et 36 sont symétriques par rapport à un axe médian passant par les méplats 32. Cette forme de réalisation octogonale de la plaque métallique 20 correspond sensiblement à deux trapèzes accolés l'un à l'autre par leurs grandes bases.

Dans cette seconde forme de réalisation, à chaque surface d'appui 34 ou 36 correspond une butée 38. Ces dernières sont similaires aux butées 24 décrites précédemment à cela mis à part que leurs dimensions sont adaptées à celles des surfaces d'appui 34 ou 36 correspondantes. Ainsi, chacune des butées 38 présente une surface d'appui 40 de forme complémentaire à la surface 34 ou 36 correspondante. Chacune de ces butées 38 est fixée par une vis 28 sur la face transversale 14 correspondante de la branche 4. Un trou oblong (non représenté) est ici aussi prévu dans chaque butée 38. Ces butées 38 présentent une partie servant à la fixation de la butée qui recouvre une face transversale 14 et une partie en saillie au-dessus de la face latérale avant 12 qui coopère avec la plaquette de freinage pour maintenir celle-ci en place.

Dans cette forme de réalisation, telle que représentée sur les figures 2 et 4, les quatre butées 38 transversales sont réglables. Deux d'entre elles pourraient être des butées fixes, par exemple les deux butées se trouvant d'un même côté de la plaquette de freinage correspondante.

Deux butées 38 se trouvant d'un même côté d'une plaquette de freinage 6 sont reliées entre elles par un dispositif de liaison 42. Ce dernier permet de régler l'écartement séparant les deux butées 38 qu'il relie. Dans la forme de réalisation représentée au dessin, il s'agit d'un écrou coopérant avec deux tiges filetées de pas inverses, l'une solidaire d'une butée 38, l'autre de l'autre butée 38 reliée.

La figure 5 représente une variante de réalisation de la forme de réalisation des figures 2 et 4. La structure du dispositif est la même mais ici l'extrémité de la plaquette de freinage 6 et de sa plaque métallique 20 est de forme arrondie. Il peut s'agir d'une extrémité en forme de demi-cercle, ou bien en forme de deux quarts de cercle reliés par un méplat. D'autres formes courbes peuvent être envisagées. Les butées 38' coopèrent ainsi avec des surfaces d'appui 34' et 36' courbes. Elles présentent ainsi des surfaces d'appui 40' qui sont inclinées et, en position calée, sensiblement tangentes aux surfaces d'appui 34' et 36'.

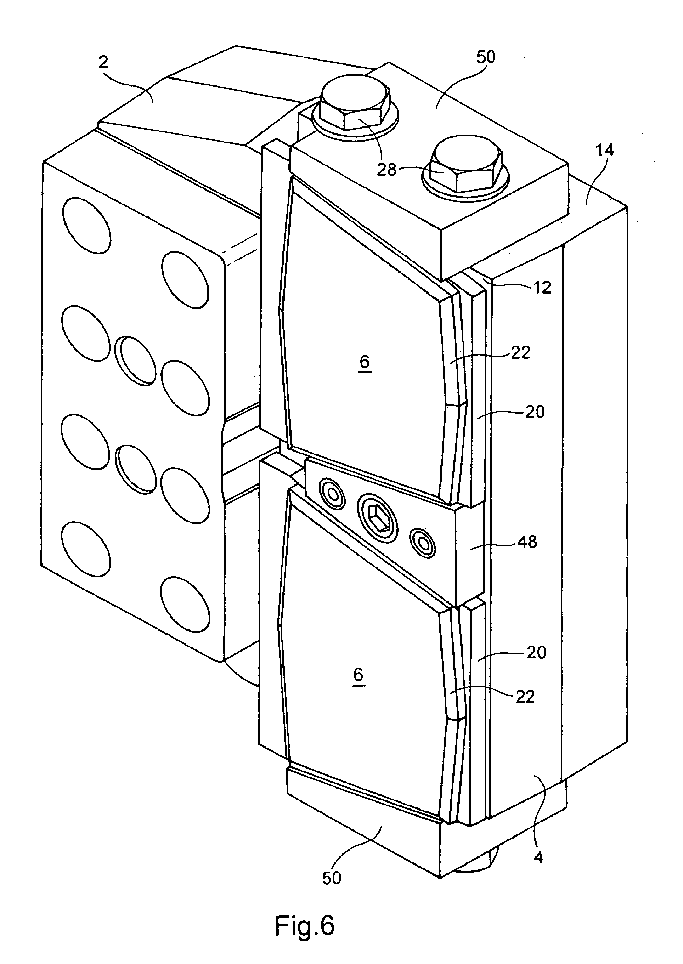

Une autre variante de réalisation est représentée sur la figure 6. Le frein représenté sur cette figure comporte deux plaquettes de freinage 6 de chaque côté du disque de frein. Chacune des plaquettes de freinage 6 est similaire à la plaquette de freinage 6 de la figure 1 et comporte d'une part une plaque métallique 20 et d'autre part une garniture 22. La plaque métallique est ici de forme trapézoïdale et le trapèze est orienté de telle sorte que sa grande base se trouve du côté de la base 2 de l'étrier tandis que sa petite base se trouve orientée vers l'intérieur du disque.

Dans cette forme de réalisation, chaque plaquette de freinage coopère avec une butée fixe 48 et une butée ajustable 50. La forme de la branche 4 de l'étrier de frein représentée sur la figure 6 est similaire à celle de la branche 4 de la figure 1. Les plaquettes de freinage 6 sont ainsi portées par une face latérale avant 12 et les butées ajustables 50 sur une face transversale 14 de la branche 4. La butée fixe 48 est de forme trapézoïdale (les bords latéraux de ce trapèze étant de pente inversée par rapport aux bords des plaquettes de freinage correspondantes) et est disposée sensiblement en position centrale sur la face latérale avant 12. Ces faces transversales 14 dans la variante de réalisation de la figure 6 ne sont pas sensiblement parallèles comme dans les formes de réalisation des figures 1 ou 2. Elles sont inclinées de manière à suivre sensiblement les bords inclinés du trapèze des plaques métalliques 20 des plaquettes de freinage 6. Les butées ajustables 50 sont ainsi en forme de coin avec une inclinaison correspondante. On ne retrouve plus dans cette variante de réalisation la section transversale en L des butées.

Les butées ajustables 50 sont vissées chacune sur la face transversale 14 correspondante de la branche 4. Des trous oblongs (non visibles sur la figure 6) sont prévues dans ces butées pour permettre leur fixation par des vis 28 et leur réglage en position.

Le remplacement d'une plaquette de freinage 6 et l'ajustement de celle-ci avec l'une ou l'autre des formes de réalisation décrites ci-dessus sont des opérations facilement et rapidement réalisables.

Dans les formes de réalisation des figures 1, 3 et 6, pour retirer une plaque de freinage 6 montée sur une branche 4 de l'étrier, il suffit de retirer une butée 24, 50 en dévissant les deux vis 28 correspondantes. Cette opération est facilement réalisable car les vis 28 se trouvent sur la face transversale 14 et sont généralement relativement facilement accessibles. Une fois la butée 24, 50 retirée (cette position est représentée en pointillés sur la figure 3), la plaquette de freinage 6 correspondante se retire facilement par simple coulissement parallèlement au disque.

Lorsqu'une nouvelle plaquette de freinage 6 est mise en place, elle est positionnée pour venir en appui contre la base 2 de l'étrier et la butée 24 qui est restée en place (c'est-à-dire la butée fixe 48 sur la figure 6).

Dans la forme de réalisation des figures 1 et 3, les deux butées 24 sont ajustables. Les vis 28 étant alors modérément vissées, chaque butée 24 est coulissée jusqu'à venir au contact de la plaque métallique 20 grâce à la présence du trou oblong réalisé dans chacune des butées 24. Les vis 28 sont alors serrées et on réalise ainsi un parfait calage de la plaquette de freinage 6 dans son logement. Pour maintenir ce positionnement, on remet en place la butée 24 enlevée et on la fixe à l'aide des vis 28 correspondantes. Les vis 28 sont ajustées de telle sorte que la butée 24 correspond au mieux au bord correspondant de la plaque métallique 20 de la plaquette de freinage 6. Les flèches 44 de la figure 3 symbolisent les points de calage et d'appui de la plaquette de freinage 6 ainsi montée sur la branche 4 de l'étrier.

Dans la forme de réalisation de la figure 6, le calage de chaque plaquette de freinage 6 est réalisé uniquement en venant caler la plaquette sur la butée fixe 48 centrale et la base 2 de l'étrier et en ajustant la butée ajustable 50 correspondante.

Dans la forme de réalisation (figures 4 et 5), la dépose d'une plaquette de frein 6 se réalise de la manière suivante. Les deux butées 38, 38' se trouvant d'un même côté de la plaquette de frein 6 sont démontées en dévissant les deux vis 28 correspondantes (cf. position en pointillés sur la figure 4). La plaquette de freinage 6 correspondante est ainsi libérée et peut être retirée en se déplaçant parallèlement au plan du disque de frein.

Pour remettre une nouvelle plaquette de freinage 6 en place, celle-ci est coulissée parallèlement au disque de frein de manière à venir plaquer une surface d'appui 34, 34' et une surface d'appui 36, 36' contre les deux butées 38, 38' restées en place. En agissant sur le dispositif de liaison 42 et sur les vis 28 des butées 38, 38' montées sur la branche 4 correspondante de l'étrier, on obtient un parfait ajustement de la plaquette de freinage, ou plus précisément de sa plaque métallique 20, par rapport à ces deux butées 38, 38'. Les deux autres butées 38, 38' sont alors remises en place, fixées et ajustées à l'aide des vis 28 correspondantes et du dispositif de liaison 42 les reliant. En agissant sur l'écrou du dispositif de liaison 42, comme suggéré par la flèche 46, on obtient un ajustement des deux autres butées 38, 38' par rapport à la plaquette de freinage 6 et sa plaque métallique 20. Les points de calage et d'appui sont représentés par les flèches 44. On remarque que dans cette forme de réalisation tous les points de calage et d'appui sont réalisés entre les butées 38, 38' et la plaque métallique 20 de la plaquette de frein 6 tandis que dans la première forme de réalisation des points d'appui sont prévus entre la plaque métallique 20 de la plaquette de freinage 6 et la base 2 de l'étrier.

Dans un frein selon l'invention, pour chaque plaquette de freinage 6, il y a au moins deux butées transversales. L'une de ces butées est réglable de telle sorte qu'un calage statique peut être effectué lors du montage de la plaquette dans son logement. La position relative des deux butées transversales correspondant à une même plaquette de freinage peut ainsi être réglée lors du montage de la plaquette. Les surfaces d'appui convergentes entre la plaquette de freinage et les butées transversales permettent, lors du fonctionnement du frein de maintenir la plaquette parfaitement en position. Ceci permet d'éviter les bruits de freinage et aussi lors du maintien d'un disque, tout battement de celui-ci. Un tel battement induit dans les freins de l'art antérieur un mouvement radial des pistons dans leurs cylindres, provoquant une fatigue des joints et par la suite des fuites.

Comme il ressort de la description qui précède, l'ajustement des plaquettes de freinage 6 peut être réalisé simplement. En outre, ces plaquettes peuvent être montées/démontées sans dépose du frein correspondant. La conception de ce frein permet un montage/démontage facile tant en usine que sur site. Une fois l'ajustement réalisé suivant les directions tangentielles et radiales (par rapport au disque de frein) tout mouvement aléatoire de la plaquette de freinage dans son logement est évité lors de l'usure (et/ou de la flexion) des guidages de la couronne à laquelle est associé le frein. Les formes de plaquettes de frein décrites permettent l'ajustement automatique de celles-ci dans leur logement. Les contraintes exercées sur le frein n'entraînent pas de déplacement de la plaquette de frein et préservent ainsi les différentes pièces de ce frein. On évite ainsi tout bruit de claquement des plaquettes dans leur logement et toute usure des pièces d'entraînement de l'ensemble freiné. Au niveau du frein, les fuites hydrauliques constatées sur d'autres freins notamment au niveau des pistons d'entraînement des plaquettes de freinage, sont évitées.

La présente invention ne se limite pas aux formes de réalisation décrites ci-dessus à titre d'exemples non limitatifs. Elle s'étend à toutes les variantes de réalisation à la portée de l'homme du métier dans le cadre des revendications ci-après.

L'invention peut ainsi par exemple s'appliquer aussi bien à des freins à disque à étrier fixe qu'à étrier flottant.

## Revendications

1. Frein à disque pour usage industriel comportant au moins deux plaquettes de freinage (6) portées par un étrier présentant une base (2) et deux branches (4) entre lesquelles vient prendre place le disque, chacune des plaquettes de freinage (6) étant destinée à coopérer avec une face latérale du disque sous l'action de moyens de manoeuvre et comportant au moins deux faces d'appui transversales opposées (26, 36), chacune de celles-ci coopérant avec une butée transversale (24, 38) lors d'un freinage, deux faces d'appui transversales opposées (26, 36) d'une plaquette de freinage (6) étant sensiblement tangentielles aux surfaces d'appui des butées (24, 38) correspondantes, et les tangentes aux zones d'appui étant convergentes,
**caractérisé en ce qu'**au moins une butée transversale (24, 38) est une butée réglable, et partant mobile par rapport à une autre butée transversale correspondant à ladite plaquette de freinage, de telle sorte qu'un calage statique par effet de coin de ladite plaquette de freinage (6) peut-être effectué lors de son montage.

2. Frein à disque selon la revendication 1, **caractérisé en ce qu'**au moins une butée (24, 38) coopérant avec une face d'appui d'une plaquette de freinage (6) est amovible.

3. Frein à disque selon l'une des revendications 1 ou 2, **caractérisé en ce qu'**une branche (4) de l'étrier portant une plaquette de freinage (6) comporte une face latérale (12) parallèle au disque et destinée à recevoir la plaquette de freinage (6) ainsi que deux faces transversales (14) sensiblement radiales, et **en ce qu'**au moins une butée (24, 38) coopérant avec une face d'appui de la plaquette de freinage (6) est fixée sur une face transversale (14) sensiblement radiale et fait saillie de la face latérale (12) de l'étrier pour maintenir ladite plaquette de freinage (6).

4. Frein à disque selon la revendication 3, **caractérisé en ce que** ladite butée (24, 38) est fixée par vissage sur la face transversale (14) de la branche (4) d'étrier, et **en ce qu'**un trou oblong est prévu dans ladite butée (24, 38) pour le passage de chaque vis (28).

5. Frein à disque selon l'une des revendications 1 à 4, **caractérisé en ce que** chaque plaquette de freinage (6) présente une forme trapézoïdale, les côtés inclinés du trapèze formant les surfaces d'appui transversales opposées de la plaquette de freinage (6).

6. Frein à disque selon la revendication 5, **caractérisé en ce que** la grande base de la plaquette de freinage (6) vient en appui contre la base (2) de l'étrier.

7. Frein à disque selon l'une des revendications 1 à 4, **caractérisé en ce que** deux bords opposés d'une plaquette de freinage (6) présentent chacun deux surfaces d'appui convergentes formant un dièdre.

8. Frein à disque selon la revendication 7, **caractérisé en ce que** les bords comportant les surfaces d'appui de la plaquette de freinage (6) présentent une convexité orientée vers l'extérieur de la plaquette de freinage (6).

9. Frein à disque selon l'une des revendications 7 ou 8, **caractérisé en ce qu'**à chaque surface d'appui correspond une butée transversale (38).

10. Frein à disque selon la revendication 9, **caractérisé en ce que** deux butées transversales (38) se trouvant d'un même côté d'une plaquette de freinage (6) sont reliées entre elles par un dispositif (42) permettant de régler l'écartement entre lesdites butées transversales (38).

## Claims

1. A disc brake for industrial use comprising at least two brake pads (6) carried by a caliper having a base (2) and two branches (4) between which the disc locates, each of the brake pads (6) being adapted to cooperate with a lateral face of the disc under the action of actuating means and comprising at least two opposite transverse bearing faces (26, 36), each of these latter cooperating with a transverse abutment (24, 38) during braking, two opposite transverse bearing faces (26, 36) of a brake pad (6) being substantially tangential to the bearing surfaces of the corresponding abutments (24, 38), and the tangents to the bearing zones being convergent,
**characterized in that** at least one transverse abutment (24, 38) is an adjustable abutment, and therefore moveable with respect to another transverse abutment corresponding to said brake pad, such that static setting of said brake pad (6) by a wedging effect may be carried out at the time of its mounting.

2. A disc brake according to claim 1, **characterized in that** at least one (24, 38) abutment cooperating with a bearing face of a brake pad (6) is removable.

3. A disc brake according to one of claims 1 or 2, **characterized in that** a branch (4) of the caliper bearing a brake pad (6) comprises a lateral face (12) parallel to the disc and adapted to receive the brake pad (6) as well as two substantially radial transverse faces (14), and **in that** at least one abutment (24, 38) cooperating with a bearing face of the brake pad (6) is fastened onto a substantially radial transverse face (14) and projects from the lateral face (12) of the caliper to hold said brake pad (6).

4. A disc brake according to claim 3, **characterized in that** said abutment (24, 38) is fastened by screwing to the transverse face (14) of the caliper branch (4), and **in that** an oblong hole is provided in said abutment (24, 38) for the passage of each screw (28).

5. A disc brake according to one of claims 1 to 4, **characterized in that** each brake pad (6) has a trapezoidal form, the inclined sides of the trapezium forming opposite transverse bearing surfaces of the brake pad (6).

6. A disc brake according to claim 5, **characterized in that** the large base of the brake pad (6) comes to bear against the base (2) of the caliper.

7. A disc brake according to one of claims 1 to 4, **characterized in that** two opposite edges of a brake pad (6) each have two convergent bearing surfaces forming a dihedron.

8. A disc brake according to claim 7, **characterized in that** the edges comprising the bearing surfaces of the brake pad (6) have a convexity directed outwardly from the brake pad (6).

9. A disc brake according to one of claims 7 or 8, **characterized in that** to each bearing surface there corresponds a transverse abutment (38).

10. A disc brake according to claim 9, **characterized in that** two transverse abutments (38) located on the same side of a brake pad (6) are linked together by a device (42) making it possible to adjust the separation between said transverse abutments (38).

## Patentansprüche

1. Scheibenbremse zum industriellen Einsatz, enthaltend zumindest zwei Bremsbeläge (6), die von einem Bremssattel mit einer Basis (2) und zwei Schenkeln (4) getragen sind, zwischen welchen sich die Bremsscheibe befindet, wobei die Bremsbeläge (6) jeweils dazu bestimmt sind, unter der Wirkung von Betätigungsmitteln mit einer Seitenfläche der Bremsscheibe zusammenzuwirken und zumindest zwei entgegengesetzte, quer verlaufende Abstützflächen (26, 36) aufweisen, die bei einer Bremsung jeweils mit einem quer verlaufenden Anschlag (24, 38) zusammenwirken, wobei zwei entgegengesetzte, quer verlaufende Abstützflächen (26, 36) eines Bremsbelags (6) im Wesentlichen tangential zu den Abstützflächen der entsprechenden Anschläge (24, 38) verlaufen und die wobei Tangenten zu den Abstützbereichen konvergieren,
**dadurch gekennzeichnet, dass**
zumindest ein quer verlaufender Anschlag (24, 38) ein einstellbarer Anschlag ist und zu einem weiteren dem Bremsbelag entsprechenden quer verlaufenden Anschlag beweglich ist, derart, dass ein statisches Verkeilen des Bremsbelags (6) bei seiner Anbringung durch Keilwirkung erfolgen kann.

2. Scheibenbremse nach Anspruch 1,
**dadurch gekennzeichnet, dass**
zumindest ein Anschlag (24, 38), der mit einer Abstützfläche eines Bremsbelags (6) zusammenwirkt, abnehmbar ausgeführt ist.

3. Scheibenbremse nach einem der Ansprüche 1 oder 2,
**dadurch gekennzeichnet , dass**
ein Schenkel (4) des einen Bremsbelag (6) tragenden Bremssattels eine Seitenfläche (12) aufweist, die parallel zur Bremsscheibe verläuft und dazu bestimmt ist, den Bremsbelag (6) aufzunehmen, sowie zwei im Wesentlichen radial verlaufende Querflächen (14), und dass zumindest ein Anschlag (24, 38), der mit einer Abstützfläche des Bremsbelags (6) zusammenwirkt, an eine im Wesentlichen radial verlaufende Querfläche (14) befestigt ist und von der Seitenfläche (12) des Bremssattels vorspringt, um den Bremsbelag (6) zu halten.

4. Scheibenbremse nach Anspruch 3,
**dadurch gekennzeichnet , dass**
der Anschlag (24, 38) an die Querfläche (14) des Bremssattelschenkels (4) angeschraubt ist und dass für den Durchtritt jeder Schraube (28) ein Langloch im Anschlag (24, 38) vorgesehen ist.

5. Scheibenbremse nach einem der Ansprüche 1 bis 4,
**dadurch gekennzeichnet , dass**
der Bremsbelag (6) jeweils trapezförmig ausgeführt ist, wobei die geneigt verlaufenden Trapezseiten die entgegengesetzten, quer verlaufenden Abstützflächen des Bremsbelags (6) bilden.

6. Scheibenbremse nach Anspruch 5,
**dadurch gekennzeichnet, dass**
die längere Grundseite des Bremsbelags (6) in Anlage an der Basis (2) des Bremssattels gelangt.

7. Scheibenbremse nach einem der Ansprüche 1 bis 4,
**dadurch gekennzeichnet , dass**
zwei entgegengesetzte Randkanten eines Bremsbelags (6) jeweils zwei konvergierende Abstützflächen aufweisen, die einen Flächenwinkel bilden.

8. Scheibenbremse nach Anspruch 7,
**dadurch gekennzeichnet , dass**
die die Abstützflächen des Bremsbelags (6) enthaltenden Randkanten eine nach außerhalb des Bremsbelags (6) gerichtete Ausbauchung aufweisen.

9. Scheibenbremse nach einem der Ansprüche 7 oder 8,
**dadurch gekennzeichnet , dass**
jeder Abstützfläche ein quer verlaufender Anschlag (38) entspricht.

10. Scheibenbremse nach Anspruch 9,
**dadurch gekennzeichnet , dass**
zwei quer verlaufende Anschläge (38), die sich auf einer gleichen Seite eines Bremsbelags (6) befinden, über eine Vorrichtung (42) miteinander verbunden sind, die das Einstellen des Abstands zwischen den quer verlaufenden Anschlägen (38) ermöglicht.
